# EUROPEAN PATENT APPLICATION

(11) **EP 1 914 209 A1**
(43) Date of publication of application: **23.04.2008**
(21) Application number: 06122489.5
(22) Date of filing: 18.10.2006
(51) Int. Cl.: C03C 1/00, C03C 4/00, C01B 33/16

(54) **New process of making biomaterials**

(71) Applicant: Degussa Novara Technology S.p.A., 20016 Pero (MI) (IT)
(72) Inventor: Giardino, Vincenzo, 28100 Novara (IT); Gini, Lucia, 28100 Navara (IT)
(74) Representative: Weber, Wolfgang

(57) **Abstract**

An improved sol-gel process is disclosed for the making of large synthetic silica based bioactive materials objects crack-free. A series of ordered mesoporous SiO₂-CaO-P₂O₅ sol-gel glasses which are highly bioactive has been synthesized through a sol-gel process. The mesoporous glasses are highly bioactive compared with conventional ones, due to the increased textural characteristics i.e. surface area. The bioactivity tests point out that the surface area, porosity, and 3D-structure become more important than chemical composition during the apatite crystallization stage in these materials, due to the very high textural parameters obtained. The product is intended to be used for tissue engineering applications.

## Description

### Invention description

With the term bioactive glass or biologically active glass it is meant an inorganic glass material having an oxide of silicon as its major component and which is capable of bonding with growing tissue when reacted with physiological fluids. Larry Hench and colleagues at the University of Florida first developed these materials in the late 1960s and have been further developed by his research team at the Imperial College and other researchers worldwide. There have been many variations on the original composition which was Food and Drug Admistration approved and termed bioglass®. This composition is known as 45S5. Other compositions are in the list below.
**45S5:** 46.1 mol% Si02, 26.9 mol% CaO, 24.4 mol% Na20 and 2.5 mol% P205.
**58S:** 60 mol% Si02, 36 mol% CaO and 4 mol% P205.
**S70C30:** 70 mol% Si02, 30 mol% CaO.

One important feature of the bioactive glasses is that, when immersed in a body fluid, they are able to induce the precipitation on their surface of a layer of hydroxycarbonate apatite, which is exactly the calcium carbonate form of calcium phosphate that ones are made of.

Since then Bioactive glasses have found many applications but these are primarily in the areas of bone repair and bone regeneration via tissue engineering

Synthetic bone graft materials for general orthopaedic, craniofacial (bones of the skull and face), maxillofacial and periodontal (the bone structure that supports teeth) repair. These are available to surgeons in a powder form.

### Cochlear implants.

Bone tissue engineering scaffolds. These are being investigated in many forms, in particular as porous (contains pores into which cells can grow and fluids can travel) 3-dimensional scaffolds.

The first bioactive glasses have been produced in the late 80's by fusion and where composed of a mixture of silicon, calcium, phosphorus, sodium and other oxides. It has been observed that on those glasses the silica content range needed to have rapid grow of hydroxycarbonate apatite is very narrow: from 42% to 53% (see L.L. Hench in Bioceramics vol. 7, Proc. 7th Int. Symp. On ceramics in Medicine, 1994, p. 3).

A breakthrough idea was the introduction of sol-gel techniques

In very general terms the sol-gel process has been reviewed in several reviews and patents for instance in the "Journal of Non-Crystalline Solids", Vol 37, No 191 (1980) by Nogami et al., "Journal of Non-Crystalline Solids" Vol. 47 No. 435 (1982) by Rabinovich et al. and in Angewandte Chemie 1998, 37, 22 by Huessing and Schubert.

Before to go more in depth in the description of the problems associated with the sol-gel techniques the inventors think it is necessary to spend some words to describe the principles. To begin we want to describe some terms related to the sol gel process which will be frequently used throughout this patent. The so called *sol* is a colloid with particles with diameters in the range of 1 - 950 nm. The *gel* consists of a sponge-like, three dimensional solid network whose pores are filled with another substance (usually liquid). When gels are prepared by hydrolysis and condensation of metal or semimetal or other hydrolyzable metal compounds (through a *sol* stage) the pores liquid mainly consist of water and/or alcohols. The resulting "wet" *gels* are called aquagels or hydrogels. When the liquid in the pores is replaced by air without decisively altering the structures of the network a aerogel is obtained (or criogels when the pore liquid is removed by freeze-drying). Xerogel is formed upon conventional drying of wet gel, that is by increase in temperature or decrease in pressure with concomitant large shrinkage (mostly the times destructive) of the initial uniform gel body

The large shrinkage of the gel body upon evaporation of the pore liquid is caused by capillary forces acting on the pores walls at the liquid retreats into the gel body with consequent collapse of the network structure, as described by G. Scherer in Journal of Non-Crystalline Solids Vol. 121, 1990, 104*.* Therefore other drying method had to be developed, to prepare aerogels. Among the method is worth to mention the supercritical extraction with organic solvent and/or CO₂ as described in the patents PCT/EP01/07027 and US 4,432,956. The patents describe a method according to which a gel is prepared from a solution of an alkoxysilane, to which a defined quantity of water is added for hydrolising the silane. After the gel is formed it is placed in an autoclave, an extra quantity of ethanol or acetone is added. The temperature is then risen above the critical temperature, the critical pressure is also reached. After the temperature has risen above the critical value the pressure is slowly reduced. In this manner a dry monolithic gel could be obtained.

Alternatively, in the patent US5,023,208 the pore size of the wet gel is enlarged by a hydrothermal aging treatment before the drying. In that way it is obtained a substantial reduction of mechanical stress during the drying.

While in the conventional quartz manufacturing the sol gel techniques has demonstrated all its maturity, seeing for instance the patents PCT/EP01/07027 and PCT/EP2006/05075, it is yet to e proven that it is possible to produce large object via sol-gel techniques. In particular in the US patent 5074 916 it is described a sol-gel composition which leads to a sol-gel glass with biological activity in powder form.

Herewith we describe a method of producing an ultraporous (Surface Area bigger than 100 mq / g) objects that are then via synthering transform in glass with Bioactivity.
A) Dispersing a pyrogenically prepared silicon dioxide in water or a water containing solvent, to form an aqueous or water containing dispersion;
B) Addition of P205 and CaO
C) Addition of an acid in order to reach a pH-value of 2 +.0.5;
D) Addition of tetraethylorthosilicate (TEOS);
E) Additionally the ethanol formed by TEOS hydrolysis can be removed by evaporation at reduced pressure (P = 0.29 bar).
F) Titration of the sol by means of ammoniumhydroxide till pH 4.1 ± 0.2;
G) Sol so obtained is poured into moulds where the gelation takes place;
H) Substitution of solvent in the gel pores with an aprotic solvent;
I) Gel setting in a pressure chamber;
J) Inert gas fluxing into the pressure chamber;
K) Pressure chamber heating over a programmed time period to achieve pre-determinate temperature and pressure values, lower than the relevant critical value of the gel solvent, and evaporation thereof;
L) Depressurization of the pressure chamber washing by an inert gas;
M) Cooling the dried gel and removal thereof from the pressure chamber;
N) Dried gel syntherization by heating at a prefixed temperature to form a glassy body without any cracking.

By means of this procedure it has been obtained for the first time a glass with large dimensions containing CaO and P₂O₅. In particular it have been obtained discs with 16 cm diameter and thickness 6cm. At the best of our knowledge this is the first time that preparation of objects with such dimension have been reported. The density of the aerogel material obtained averages 0.3 g/cm³, while the density of the corresponding glass is 2.3377 g/cm³.

The inventors think that is worth to mention that in the described method there is a stage of ipercritical drying in an autoclave during which the solvent is removed in order to obtain the so-called aerogel. At the best of inventors knowledge this procedure has never been described in other patents claiming preparation of bioactive glasses obtained via sol-gel.

Without the wish to being bound to any particular theory or mechanism, is believed

that the high yield in large dimension glasses that the inventors experienced, lies on the very peculiar surface composition that gives the mechanical stability preventing cracking and also gives the wished biological activity.

The composition has been determined via XPS analysis. The results show that the composition of the obtained objects is well out of the range claimed in the literature, like for example in the EP1196150B1 and in the same cited literature.

In particular the composition is: C30.0 atom. %, 039.6 atom.%, Si 25.2 atom.%, Ca 1.0 atom. %, P 1.5 atom.%, Cl atom. 0.2.%.

In order to assess the biological activity the glasses have been immersed for 7 days at 37°C in a liquid that resembles the human body fluid (SBF). This test is well accepted within the scientific community since with the results the scientist is able to predict if the glass is suitable for implantation in human bone structures. In particular, is known that if after the contact with the SBF there is development on the surface of the glass of an bone-like substance such a Hydroxicalciumepatite (HCA) means that the glass is bioactive and biocompatible.

In the test performed by the inventors the indication of the formation of a HCA layer is obtained by FT-IR and by microscopy (SEM) analyses.

## Claims

1. a method to obtain glassy objects via sol-gel techniques:
• Dispersing a pyrogenically prepared silicon dioxide in water or a water containing solvent, to form an aqueous or water containing dispersion;
• Addition of P205 and CaO
• Addition of an acid in order to reach a pH-value of 2 +.0.5;
• Addition of tetraethylorthosilicate (TEOS);
• Additionally the ethanol formed by TEOS hydrolysis can be removed by evaporation at reduced pressure (P = 0.29 bar).
• Titration of the sol by means of ammoniumhydroxide till pH 4.1 ± 0.2;
• Sol so obtained is poured into moulds where the gelation takes place;
• Substitution of solvent in the gel pores with an aprotic solvent;
• Gel setting in a pressure chamber;
• Inert gas fluxing into the pressure chamber;
• Pressure chamber heating over a programmed time period to achieve pre-determinate temperature and pressure values, lower than the relevant critical value of the gel solvent, and evaporation thereof;
• Depressurization of the pressure chamber washing by an inert gas;
• Cooling the dried gel and removal thereof from the pressure chamber;
• Dried gel syntherization by heating at a prefixed temperature to form a glassy body without any cracking.

2. A method according to claim 1 where the ipercritical drying I carried out in an aprotic solvent in ipercritical conditions (T 250°C).
